# EUROPEAN PATENT APPLICATION

(11) **EP 3 385 200 A2**
(43) Date of publication of application: **10.10.2018**
(21) Application number: 18159901.0
(22) Date of filing: 05.03.2018
(51) Int. Cl.: B65G 47/90, B25J 15/00, B65G 47/91

(54) **MOVING APPARATUS, PACKAGING DEVICE AND PACKAGING METHOD**

(30) Priority: 16.03.2017 CN 201710156020
(71) Applicant: Bosch Packaging Technology (Hangzhou) Co., Ltd., 310018 Hangzhou, Zhejiang (CN)
(72) Inventor: Shen, Yazhou, Hangzhou, Zejiang, Zhejiang 310018 (CN); HAN, Yan, Hangzhou, Zhejiang, Zhejiang 310018 (CN); LU, Xiande, Hangzhou, Zhejiang, Zhejiang 310018 (CN); WU, Xuping, Hangzhou, Zhejiang, Zhejiang 310018 (CN)
(74) Representative: Bee, Joachim

(57) **Abstract**

The present invention relates to a moving apparatus, comprising: comprising: a conveyor belt for conveying an article in a step-by-step manner; at least one pickup apparatus for picking up and placing an article; at least one transport apparatus for transporting an article; wherein the pickup apparatus comprises equal numbers of at least one first pickup component and at least one second pickup component, and is configured so that at the first pickup position, the at least one first pickup component can pick up an unprocessed article on the conveyor belt and the at least one second pickup component can place a processed article on the conveyor belt, and at the second pickup position, the at least one first pickup component can place an unprocessed article on the transport apparatus and the at least one second pickup component can pick up a processed article on the transport apparatus. The present invention also relates to a packaging device comprising the moving apparatus, and a packaging method. According to the present invention, output can be increased and costs can be reduced.

## Description

### Technical field

The present invention relates to the technical field of conveying, moving and packaging, more particularly to a moving apparatus, a packaging device comprising such a moving apparatus, and a packaging method.

### Background art

In the packaging industry, various packaging devices are widely used to perform packaging operations. Generally, a conveyor belt is used to convey unpackaged articles, and a moving apparatus is used to move unpackaged articles from the conveyor belt to a packaging workstation to be packaged, then the packaged articles are moved from the packaging workstation onto the conveyor belt by the moving apparatus. Thus, a moving process of the moving apparatus is a key factor influencing final output.

At the present time, manufacturers desperately want the output of packaging devices to be ever greater, and this means that packaging devices should have higher efficiency than before. However, in the current market, a high output can only be provided by expensive packaging devices; inexpensive packaging devices can only provide a very low output. Clearly, these two types of device are unable to perfectly meet the real demands of consumers, who wish to obtain a packaging device with a high output and a low price.

Three moving methods in current use on the market are presented below, taking an injector packaging device as an example.
1. Manual moving method: two transfer plates are used to move and collect packaged articles. In a continuous production process, a relatively long time is spent on replacing an injector nest plate, and additional time is spent waiting for an electrical safety recovery period. A shortcoming of packaging devices using this method is too low an output.
2. Automatic moving method: one rotary transfer plate is used. In a continuous production process, waiting for a mechanical arm to rotate to a conveyor belt requires additional time, waiting for the mechanical arm to put a completed injector nest plate back on a box support of the conveyor belt requires time; moreover, waiting for the conveyor belt to move forward, and waiting for the mechanical arm to rotate back, both require time. A shortcoming of packaging devices using this method is a high cost, while the output is still low.
3. Automatic moving method: one transfer plate with a linear layout is used. Since the distance from a loading workstation to an unloading workstation is long, more time is required for the transfer plate to move to and fro. A loading arm and an unloading arm are independent and separately controlled, and a long lateral conveying mechanism is expensive. Although a packaging device using this method can achieve a high output, it still has the shortcoming of high cost.

The packaging field is not the only field like this; more or less the same problems affect other fields including similar moving processes. Thus, it is necessary to improve upon existing moving apparatuses, in particular moving apparatuses used for packaging devices, in order to increase output and reduce costs.

### Content of the invention

The object of the present invention is to overcome at least one of the problems afflicting an existing moving apparatus, by proposing an improved moving apparatus, which can optimize a production process, shorten time and increase output, as well as having a relatively simple and economical structure.

To this end, according to one aspect of the present invention, a moving apparatus is provided, the moving apparatus comprising:
a conveyor belt for conveying an article in a step-by-step manner;
at least one pickup apparatus for picking up and placing an article;
at least one transport apparatus for transporting an article;
wherein the pickup apparatus comprises equal numbers of at least one first pickup component and at least one second pickup component, and is configured to move between a first pickup position and a second pickup position, so that at the first pickup position, the at least one first pickup component can pick up an unprocessed article on the conveyor belt and the at least one second pickup component can place a processed article on the conveyor belt, and at the second pickup position, the at least one first pickup component can place an unprocessed article on the transport apparatus and the at least one second pickup component can pick up a processed article on the transport apparatus.

Preferably, the pickup apparatus further comprises a support rod, the support rod being configured to cause the at least one first pickup component and the at least one second pickup component to rotate and/or move translationally and thereby move between the first pickup position and the second pickup position.

Preferably, at the second pickup position, a connecting line between the centre of the at least one first pickup component and the centre of the at least one second pickup component is parallel to the conveyor belt.

Preferably, the pickup apparatus comprises one first pickup component and one second pickup component, and at the second pickup position, the centre-to-centre distance between the one first pickup component and the one second pickup component is equal to the centre-to-centre distance between two adjacent articles placed so as to be spaced apart on the conveyor belt.

Preferably, the conveyor belt steps forward by one distance of travel each time, the distance of travel being a multiple of the centre-to-centre distance between two adjacent pickup components, the multiple being the quantity of the at least one first pickup component or the at least one second pickup component.

Preferably, the at least one first pickup component and the at least one second pickup component can each pick up the same quantity of at least one article.

Preferably, the at least one transport apparatus is configured to be able to receive an unprocessed article from the at least one first pickup component at a first transport position and transport the unprocessed article to a second transport position, and to be able to transport a processed article from the second transport position to a third transport position to be picked up by the at least one second pickup component.

Preferably, the at least one pickup apparatus and the at least one transport apparatus are disposed on one side or two sides of the conveyor belt.

Preferably, the moving apparatus further comprises a controller, the controller being configured to control coordinated movement of the at least one pickup apparatus, the at least one transport apparatus and the conveyor belt.

According to another aspect of the present invention, a packaging device is provided, comprising:
at least one moving apparatus as described above;
at least one packaging apparatus, configured to package an article transported by the moving apparatus;
a console, configured to control the moving apparatus and the packaging apparatus.

Preferably, the article is a container, and the packaging apparatus is a filling/plugging apparatus.

According to another aspect of the present invention, a method for using the moving apparatus as described above to carry out packaging is provided, the method comprising the following steps:
1) at a first pickup position, picking up a first article from a conveyor belt by means of a first pickup component of a pickup apparatus;
2) moving the pickup apparatus from the first pickup position to a second pickup position, and at the second pickup position, placing the first article on a transport apparatus in a first transport position, and causing the conveyor belt to step one distance of travel, such that a second article, placed on the conveyor belt so as to be spaced apart from the first article, moves to the first pickup position;
3) transporting the first article from the first transport position to a second transport position by means of the transport apparatus, moving the pickup apparatus to the first pickup position and picking up the second article from the conveyor belt by means of the first pickup component;
4) moving the pickup apparatus from the first pickup position to the second pickup position;
5) causing the transport apparatus to transport the first article from the second transport position to a third transport position, and causing the second pickup component to pick up the first article from the third transport position;
6) moving the transport apparatus to the first transport position, and causing the first pickup component to place the second article on the transport apparatus;
7) transporting the second article from the first transport position to the second transport position by means of the transport apparatus, moving the pickup apparatus from the second pickup position to the first pickup position, and placing the first article on the conveyor belt by means of the second pickup component;
8) causing the conveyor belt to step forward by said one distance of travel, then causing the first pickup component to pick up a third article from the conveyor belt;
9) moving the pickup apparatus from the first pickup position to the second pickup position;
10) repeating steps 5) to 9), wherein in the steps performed in the next repetition, the second article is regarded as a first article, and the third article is regarded as a second article.

Preferably, a filling/plugging step is performed at the second transport position.

Compared to the prior art, the moving apparatus of the present invention enables an unprocessed article to be picked up and a processed article to be placed at the same operating position, by using a pickup apparatus comprising a first pickup component and a second pickup component, thereby increasing the efficiency of pickup and placement several times over, and the structure is relatively simple and economical. In addition, the moving apparatus, the packaging device comprising such a moving apparatus, and the packaging method of the present invention utilize the coordination between the pickup apparatus, conveyor belt and transport apparatus, optimizing the production process and shortening the moving time, and thereby increasing output.

### Description of the accompanying drawings

Referring to the accompanying drawings, demonstrative embodiments of the present invention are described in detail and the present invention is explained further below. In the drawings:
Fig. 1 is a schematic three-dimensional drawing of a packaging device according to an embodiment of the present invention, in which a moving apparatus of the present invention is shown.
Fig. 2 is a schematic top view of the packaging device shown in fig. 1.
Fig. 3 shows a schematic top view of the moving apparatus of the present invention when a first step is performed.
Fig. 4 shows a schematic top view of the moving apparatus of the present invention when a second step is performed.
Fig. 5 shows a schematic top view of the moving apparatus of the present invention when a third step is performed.
Fig. 6 shows a schematic top view of the moving apparatus of the present invention when a fourth step is performed.
Fig. 7 shows a schematic top view of the moving apparatus of the present invention when a fifth step is performed.
Fig. 8 shows a schematic top view of the moving apparatus of the present invention when a sixth step is performed.
Fig. 9 shows a schematic top view of the moving apparatus of the present invention when a seventh step is performed.
Fig. 10 shows a schematic top view of the moving apparatus of the present invention when an eighth step is performed.
Fig. 11 shows a schematic top view of the moving apparatus of the present invention when a ninth step is performed.

### Particular embodiments

Preferred embodiments of the present invention are described in detail below with reference to examples. In the preferred embodiments of the present invention, the present invention is described by taking a moving apparatus for a packaging device as an example. However, those skilled in the art will understand that these demonstrative embodiments do not imply any limitation of the present invention. The moving apparatus of the present invention may be used in any device and process in which it is necessary to move an unprocessed article from a conveyor belt to a processing workstation and move the processed article to a conveyor belt. In addition, embodiments of the present invention and features in embodiments may be combined with each other, if no conflict thereby arises.

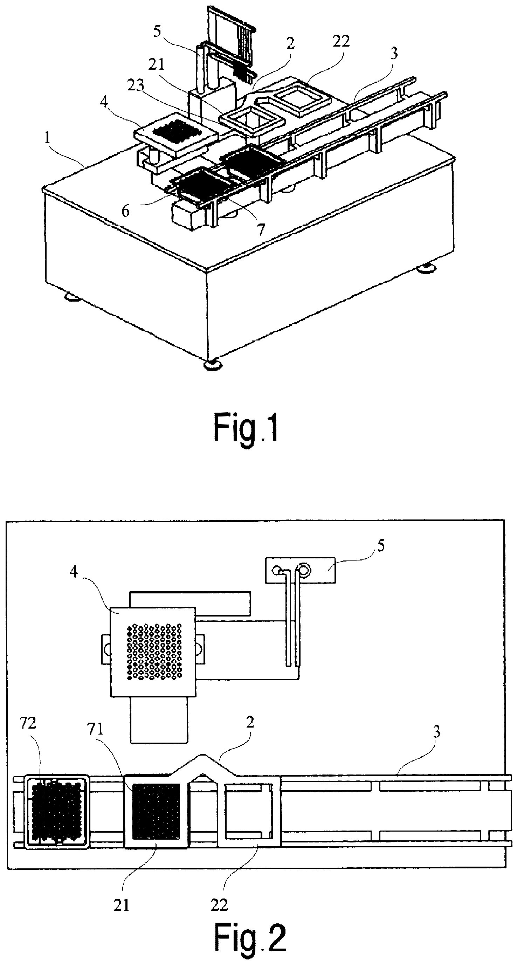

Fig. 1 is a schematic three-dimensional drawing of a packaging device according to an embodiment of the present invention, in which a moving apparatus of the present invention is shown; fig. 2 is a schematic top view of the packaging device shown in fig. 1. As shown in figs. 1 and 2, generally speaking, a packaging device 1 of the present invention comprises a moving apparatus and a packaging apparatus 5; the moving apparatus comprises a conveyor belt 3, a pickup apparatus 2 and a transport apparatus 4.

According to an embodiment of the present invention, a box support 6 is placed on the conveyor belt 3; an unpackaged article or packaged article 7 may be placed in the box support 6. Of course, it is also possible for no box support to be provided, and the article 7 may be placed directly on the conveyor belt 3. The conveyor belt 3 can move forward under the driving action of a drive mechanism (not shown). The conveyor belt 3 may move in a step-by-step manner. As shown in fig. 2, adjacent box supports on the conveyor belt 3 may be placed so as to be spaced apart by a gap, but could of course also be placed in an adjoining manner.

According to one embodiment of the present invention, the pickup apparatus 2 comprises a first pickup component 21, a second pickup component 22 and a support rod 23. The first pickup component 21 and second pickup component 22 are arranged symmetrically relative to the support rod 23, on one side of the support rod 23. Under the driving action of a drive mechanism (not shown), the support rod 23 can drive the first pickup component 21 and second pickup component 22 to rotate from a first pickup position to a second pickup position, so that at the first pickup position, the first pickup component 21 can pick up an unpackaged article 7 on the conveyor belt 3 and the second pickup component 22 can place a packaged article 7 on the conveyor belt 3, or at the second pickup position, the second pickup component 22 can pick up a packaged article on the transport apparatus 4 and the first pick up component 21 can place an unpackaged article on the transport apparatus 4. Thus, it is possible to complete one pickup and also complete one placement in the course of a single movement of the pickup apparatus 2, thereby increasing the operating efficiency several times over.

As shown in fig. 2, the centre-to-centre distance between the first pickup component 21 and the second pickup component 22 is equal to the centre-to-centre distance between two adjacent articles placed so as to be spaced apart on the conveyor belt 3. Thus, the distance of travel of each forward step of the conveyor belt 3 is the centre-to-centre distance between the first pickup component 21 and the second pickup component 22, i.e. one box support position.

As in figs. 1 and 2, the first pickup component 21 and the second pickup component 22 are each shown as a single component, and each pickup component can only pick up one article each time. However, equal numbers of multiple first pickup components 21 and multiple second pickup components 22 could also be provided, or each pickup component could pick up multiple articles simultaneously. For example, equal numbers of 2, 3, 4 or more first pickup components 21 and second pickup components 22 could be provided, or each pickup component could pick up the same quantity of 2, 3, 4 or more articles simultaneously. Thus, in a single operating process of the pickup apparatus 2, the number of articles moved simultaneously can be increased several times over. In such circumstances, the transport apparatus 4 and the conveyor belt 3 must also be adjusted correspondingly. For example, the transport apparatus 4 must be able to simultaneously receive and transport multiple articles, and the distance of travel of each forward step of the conveyor belt 3 must also be adjusted in proportion. In the case where multiple first pickup components 21 and multiple second pickup components 22 are provided, the centre-to-centre distance between two adjacent pickup components preferably corresponds to the centre-to-centre distance between two adjacent articles placed so as to be spaced apart on the conveyor belt 3. Thus, the distance of travel of each forward step of the conveyor belt 3 is a multiple of the centre-to-centre distance between two adjacent pickup components; this multiple is the number of first pickup components 21 or second pickup components 22.

In one example, the first pickup component 21 and second pickup component 22 may move up and down relative to the conveyor belt 3, to facilitate the pickup and placement of articles from above. The first pickup component 21 and the second pickup component 22 may comprise a pickup mechanism such as a suction plate, a clamp, a fork or an electromagnet. Different pickup components may be chosen, depending on the article to be moved.

In addition to the rotational motion of the pickup apparatus 2 described above (i.e. the support rod 23 driving the first pickup component 21 and the second pickup component 22 to rotate), the pickup apparatus 2 may also move translationally, i.e. the support rod 23 drives the first pickup component 21 and the second pickup component 22 to undergo translation from the first pickup position to the second pickup position or to return, or the support rod 23 does not move, and the first pickup component 21 and the second pickup component 22 undergo translation from the first pickup position to the second pickup position or return relative to the support rod 23. Alternatively, the pickup apparatus 2 may realize movement between the first pickup position and the second pickup position through both rotational motion and translational motion. In addition, in the embodiment of rotational motion of the pickup apparatus 2 shown in figs. 1 and 2, the first pickup component 21 and second pickup component 22 are symmetrically disposed on one side of the support rod 23, but in an embodiment of translational motion of the pickup apparatus 2, the first pickup component 21 and second pickup component 22 could also be disposed asymmetrically. In addition, in an embodiment of translational motion, there may be two or more support rods 23, and the pickup apparatus 2 may realize translational motion by multiple drive methods.

According to an embodiment of the present invention, the transport apparatus 4 is an apparatus capable of transporting an article between multiple transport positions under the driving action of a drive mechanism (not shown), e.g. a moveable flat plate or box support. The transport apparatus 4 can receive an unpackaged article 7 from the first pickup component 21 of the pickup apparatus 2 at a first transport position, and transport the article to a second transport position (e.g. a packaging position) to be packaged by the packaging apparatus 5, and can transport the packaged article from the second transport position to a third transport position to be picked up by the second pickup component 22 of the pickup apparatus 2.

As an example, the unpackaged article shown in figs. 1 and 2 is a drug container, such as an empty injector, an empty vial or an empty cartridge, and the packaging apparatus is a filling/plugging apparatus. Of course, for different packaging uses, the article may be various types of packaging material such as a box, a bag or coiled material, or packaged material such as loose material or a primary processing product, and the packaging apparatus could also be an apparatus for e.g. packing into boxes, affixing labels or bundling. For non-packaging uses, the article could be many types of workpiece, such as a mechanical component, foodstuff or chemical industry product, and the packaging apparatus could be many types of processing apparatus for subjecting the workpiece or product to further processing, such as mechanical processing or chemical processing.

In addition, figs. 1 and 2 only show one pickup apparatus 2 and one transport apparatus 4 arranged on one side of the conveyor belt 3, but the present invention also envisages multiple pickup apparatuses 2 and multiple transport apparatuses 4 being disposed on one side of the conveyor belt 3, or one or more pickup apparatuses 2 and transport apparatuses 4 also being arranged on the other side of the conveyor belt 3. Of course, this would require corresponding adjustment of the conveyor belt 3, e.g. two or more rows of articles being conveyed simultaneously on the conveyor belt 3. Thus, double the operating efficiency or higher operating efficiency may be achieved by means of one conveyor belt, and the area occupied is reduced.

In figs. 1 and 2, for the sake of conciseness, other components have been omitted, but this does not mean that the article moving apparatus and packaging device of the present invention cannot include other components.

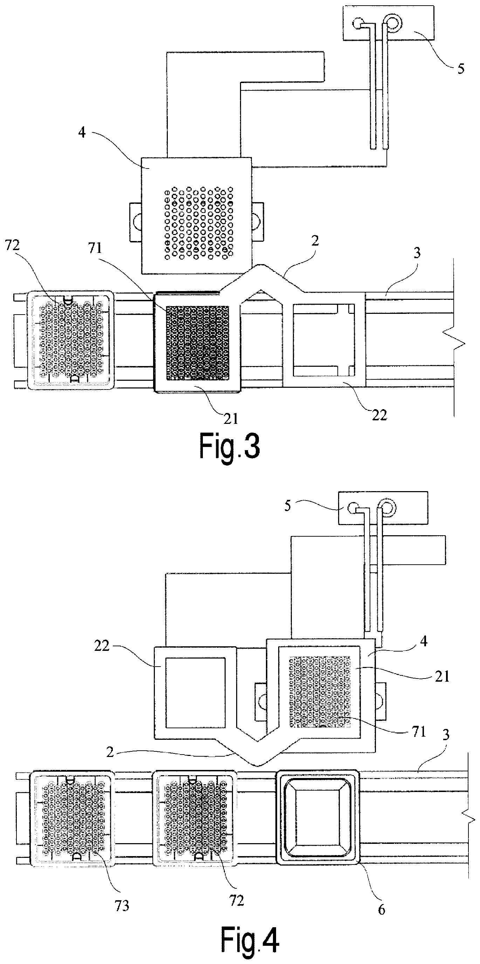

The moving apparatus, packaging device and packaging method of the present invention are described in detail below with reference to the operating steps of the moving apparatus of the present invention shown in figs. 3 to 11.

Before the moving apparats of the present invention is started up, the pickup apparatus 2 is in the first pickup position, and the conveyor belt steps forward such that a first article 71 on the conveyor belt 3 is located below the first pickup component 21 of the pickup apparatus 2, as shown in fig. 3. The articles on the conveyor belt 3 may be supplied by an upstream device, and sent to a downstream device.

Fig. 3 shows a schematic top view of the moving apparatus of the present invention when a first step is performed. As shown in fig. 3, at the first pickup position, the first pickup component 21 is located on a left side of the support rod 23 and above the first article 71 on the conveyor belt 3. In the first step, the first pickup component 21 picks up the first article 71 from the conveyor belt 3.

Fig. 4 shows a schematic top view of the moving apparatus of the present invention when a second step is performed. As fig. 4 shows, the pickup apparatus 2 rotates (for example but not limited to 180 degrees) and thereby moves from the first pickup position to the second pickup position, such that the first pickup components 21 carrying the first article 71 is located on a right side of the support rod 23 and above the transport apparatus 4. At this time, the transport apparatus 4 is in the first transport position, as shown in fig. 4, in a right-side position. Then, the first pickup component 21 places the picked up first article 71 on the transport apparatus 4, and the conveyor belt 3 is made to step forward by one distance of travel, such that a second article 72, placed on the conveyor belt 3 so as to be spaced apart from the first article 71, moves to the first pickup position. Said one distance of travel is the centre-to-centre distance between two adjacent articles placed so as to be spaced apart. In the embodiment shown in fig. 4, a connecting line between the centre of the first pickup component 21 and the centre of the second pickup component 22 is parallel to the conveyor belt 3. Thus, the movement of the pickup apparatus 2 is easier to control, and the movement space is decreased.

According to another embodiment, in the second step, the pickup apparatus 2 moves translationally from the first pickup apparatus to the second pickup apparatus, and the first transport position is set to be a position below the second pickup component 22 shown in fig. 4; thus, the first pickup component 21, the first transport position and the transport apparatus 4 still maintain correspondence.

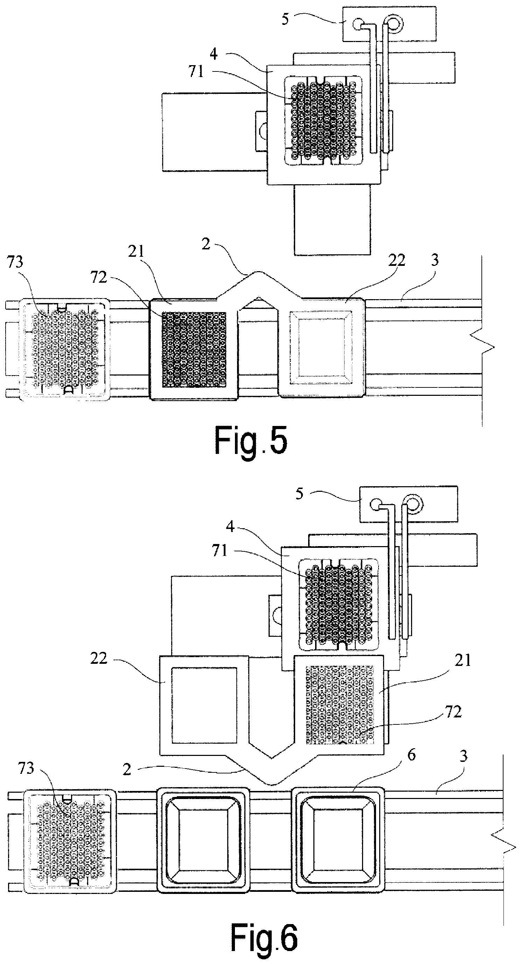

Fig. 5 shows a schematic top view of the moving apparatus of the present invention when a third step is performed. As shown in fig. 5, the transport apparatus 4 transports the first article 71 from the first transport position to the second transport position; the pickup apparatus 2 rotates (for example but not limited to 180 degrees) and thereby returns to the first pickup position from the second pickup position, and picks up the second article 72 by means of the first pickup component 21. The second transport position may coincide with a packaging position, and the first article 71 is packaged by the packaging apparatus 5 at this position. Of course, the first article 71 could also be picked up by another device at the second transport position and enter another processing process.

According to another embodiment, in the third step, in the case where the moving apparatus 2 moves translationally, the second transport position is preferably disposed on the left side of the position of the transport apparatus 4 shown in fig. 5, to decrease the movement path.

Fig. 6 shows a schematic top view of the moving apparatus of the present invention when a fourth step is performed. As shown in fig. 6, the pickup apparatus 2 rotates and thereby moves from the first pickup position to the second pickup position. At this time, the pickup component 21 carrying the second article 72 is located above the first transport position, and the transport apparatus 4 transporting the first article 71 is still in the second transport position (i.e. the packaging position).

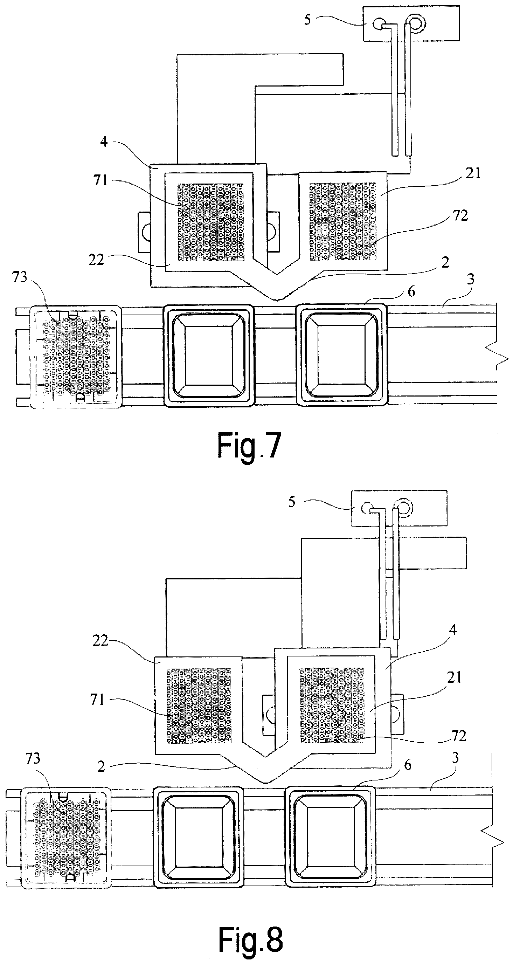

Fig. 7 shows a schematic top view of the moving apparatus of the present invention when a fifth step is performed. As shown in fig. 7, the transport apparatus 4 transports the packaged first article 71 from the second transport position to the third transport position, then the pickup component 22 of the pickup apparatus 2 picks up the first article 71 from the third transport position.

According to another embodiment, in the fifth step, in the case where the moving apparatus 2 moves translationally, the third transport position is set to be a position below the first pickup component 21 shown in fig. 7; thus, the second pickup component 22, the third transport position and the transport apparatus 4 still maintain correspondence.

Fig. 8 shows a schematic top view of the moving apparatus of the present invention when a sixth step is performed. As shown in fig. 8, after the first article 71 has been picked up, the transport apparatus 4 moves from the third transport position to the first transport position, then the first pickup component 21 places the second article 72 on the transport apparatus 4.

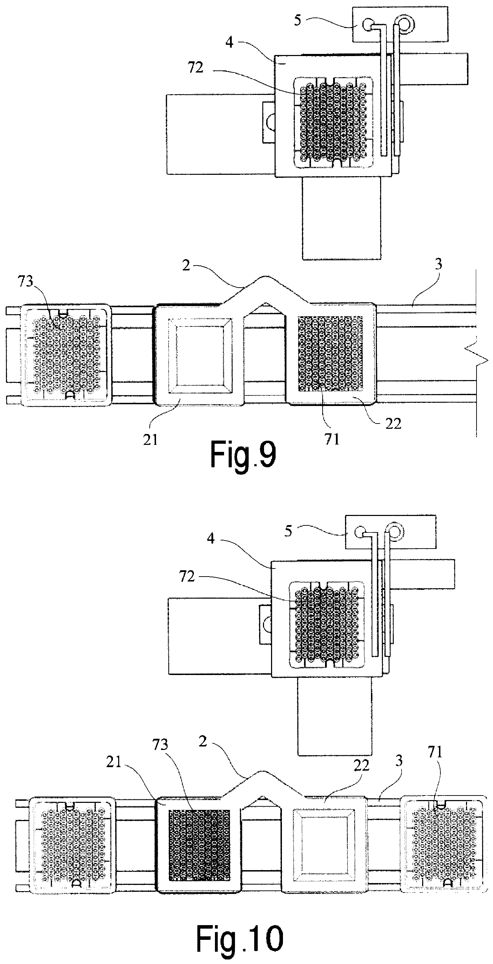

Fig. 9 shows a schematic top view of the moving apparatus of the present invention when a seventh step is performed. As shown in fig. 9, the transport apparatus 4 transports the second article 72 from the first transport position to the second transport position, the pickup apparatus 2 rotates from the second pickup position to the first pickup position, then the second pickup component 22 places the packaged first article 71 on the conveyor belt 3.

Fig. 10 shows a schematic top view of the moving apparatus of the present invention when an eighth step is performed. As shown in fig. 10, the conveyor belt 3 steps forward by one distance of travel, then the first pickup component 21 picks up a third article 73 from the conveyor belt 3.

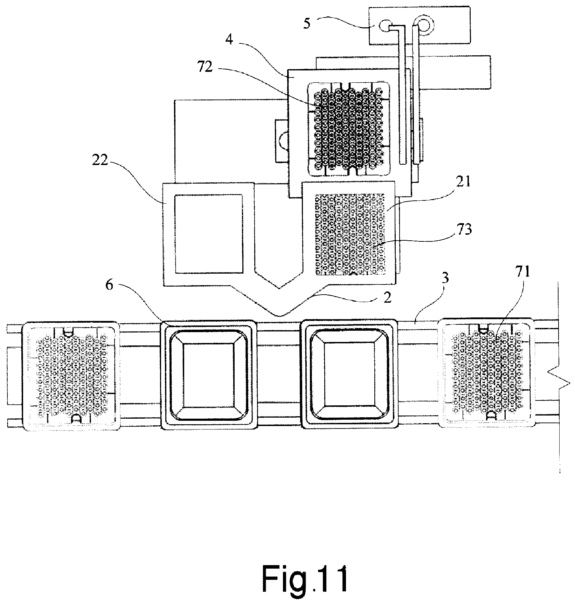

Fig. 11 shows a schematic top view of the moving apparatus of the present invention when a ninth step is performed. As fig. 11 shows, the pickup apparatus 2 rotates from the first pickup position to the second pickup position. At this time, the first pickup component 21 carrying the third article 73 is located above the first transport position, and the transport apparatus 4 carrying the second article 72 is still in the second transport position.

In a subsequent production process, the moving apparatus of the present invention may repeat the fifth to the ninth steps, until production ends, wherein in the steps performed in the next repetition, the second article 72 serves as a first article, and the third article 73 serves as a second article, and so on.

In the description of the embodiments above, the pickup apparatus 2 may alternately rotate in a clockwise direction or an anticlockwise direction, or may only rotate in the same direction, but the rotation angle of the pickup apparatus 2 between the first pickup position and the second pickup position will vary depending on the layout of the pickup apparatus and the conveyor belt 3, so the rotation angle is not limited to 180 degrees. In an embodiment of translational motion of the pickup apparatus 2, transport positions of the transport apparatus 4 must correspond to the respective positions of the first pickup component 21 and the second pickup component 22 at the second pickup position.

In the moving apparatus of the present invention, the pickup apparatus 2, conveyor belt 3 and transport apparatus 4 are controlled by respective controllers or by a common controller. In the case where respective controllers are used, communication between the various controllers may be carried out in a wired, wireless or any suitable manner.

The packaging device as shown in figs. 1 and 2 may also comprise a console (not shown). The console controls operation of the moving apparatus and the packaging apparatus, e.g. by controlling each controller of the moving apparatus.

An example of the use of the moving apparatus of the present invention in an injection container packaging device is described concisely below with reference to figs. 3 - 11.

When the packaging device is started up, the pickup apparatus 2 is caused to be in the first pickup position, and the conveyor belt 3 steps forward such that an empty first nest injector is located below the first pickup component 21 of the pickup apparatus 2.

First step: the first pickup component 21 picks up the first nest injector from the conveyor belt 3.

Second step: the pickup apparatus 2 rotates and thereby moves from the first pickup position to the second pickup position; the first pickup component 21 carrying the first nest injector places the first nest injector on the transport apparatus 4 in the first transport position, and the conveyor belt 3 is made to step forward by one box support position, such that a second nest injector, placed on the conveyor belt 3 so as to be spaced apart from the first nest injector, moves to the first pickup position.

Third step: the transport apparatus 4 transports the first nest injector from the first transport position to a filling/plugging position (i.e. second transport position); the pickup apparatus 2 rotates and thereby returns to the first pickup position from the second pickup position, and the empty second nest injector is picked up by means of the first pickup component 21. During the action described above, a filling/plugging apparatus fills the first nest injector.

Fourth step: the pickup apparatus 2 rotates and thereby moves from the first pickup position to the second pickup position, such that the first pickup component 21 carrying the second nest injector is located above the first transport position, and the transport apparatus 4 is still in the filling/plugging position.

Fifth step: the transport apparatus 4 transports the first nest injector, the filling of which is complete, from the filling/plugging position to the third transport position, then the second pickup component 22 of the pickup apparatus 2 picks up the filled first nest injector 71 from the third transport position.

Sixth step: the transport apparatus 4 moves from the third transport position to the first transport position, then the first pickup component 21 of the pickup apparatus 2 places the second nest injector on the transport apparatus 4.

Seventh step: the transport apparatus 4 transports the second nest injector from the first transport position to the filling/plugging position, the pickup apparatus 2 rotates and thereby moves from the second pickup position to the first pickup position, and the second pickup component places the first nest injector 71, the filling of which is complete, on the conveyor belt 3.

Eighth step: the conveyor belt 3 steps forward by one box support position, then the first pickup component 21 picks up an empty third nest injector from the conveyor belt 3.

Ninth step: the pickup apparatus 2 rotates and thereby moves from the first pickup position to the second pickup position, such that the first pickup component 21 carrying the third nest injector moves to a position above the first transport position, and the transport apparatus 4 is still in the filling/plugging position.

The fifth to the ninth steps are then repeated, until the filling operation is completed, wherein in the steps performed in the next repetition, the second nest injector is regarded as a first nest injector, and the third nest injector is regarded as a second nest injector, and so on.

According to an embodiment of the present invention, by using the moving apparatus comprising the pickup apparatus, conveyor belt and transport apparatus, coordination between the pickup apparatus and the conveyor belt/transport apparatus can be realized, so as to optimize the production process, shorten the moving time and increase output. In addition, the moving apparatus of the present invention has a relatively simple and economical structure. Thus, the packaging device using the moving apparatus of the present invention, and the packaging method, clearly also have the abovementioned advantages.

The present invention has been described in detail above with reference to particular embodiments. Clearly, all the embodiments described above and shown in the accompanying drawings should be understood as being demonstrative, without constituting a limitation on the present invention. For instance, the present invention has been described in preferred embodiments by taking the case of a moving apparatus for injection containers as an example, but application is possible not only in the technical field of packaging but also in any other technical field requiring conveyance and moving. A person skilled in the art could, without departing from the spirit of the present invention, make various modifications or amendments thereto; all such modifications or amendments would not depart from the scope of the present invention.

## Claims

1. Moving apparatus, comprising:
a conveyor belt (3) for conveying an article in a step-by-step manner;
at least one pickup apparatus (2) for picking up and placing an article;
at least one transport apparatus (4) for transporting an article;
**characterized in that** the pickup apparatus (2) comprises equal numbers of at least one first pickup component (21) and at least one second pickup component (22), and is configured to move between a first pickup position and a second pickup position, so that at the first pickup position, the at least one first pickup component (21) can pick up an unprocessed article on the conveyor belt (3) and the at least one second pickup component (22) can place a processed article on the conveyor belt (3), and at the second pickup position, the at least one first pickup component (21) can place an unprocessed article on the transport apparatus (4) and the at least one second pickup component (22) can pick up a processed article on the transport apparatus (4).

2. Moving apparatus according to Claim 1, **characterized in that** the pickup apparatus further comprises a support rod (23), the support rod (23) being configured to cause the at least one first pickup component (21) and the at least one second pickup component (22) to rotate and/or move translationally and thereby move between the first pickup position and the second pickup position.

3. Moving apparatus according to Claim 1, **characterized in that** at the second pickup position, a connecting line between the centre of the at least one first pickup component (21) and the centre of the at least one second pickup component (22) is parallel to the conveyor belt (3).

4. Moving apparatus according to Claim 1, **characterized in that** the pickup apparatus (2) comprises one first pickup component (21) and one second pickup component (22), and at the second pickup position, the centre-to-centre distance between the one first pickup component (21) and the one second pickup component (22) is equal to the centre-to-centre distance between two adjacent articles placed so as to be spaced apart on the conveyor belt (3).

5. Moving apparatus according to Claim 1, **characterized in that** the conveyor belt steps forward by one distance of travel each time, the distance of travel being a multiple of the centre-to-centre distance between two adjacent pickup components, the multiple being the quantity of the at least one first pickup component (21) or the at least one second pickup component (22).

6. Moving apparatus according to Claim 1, **characterized in that** the at least one first pickup component (21) and the at least one second pickup component (22) can each pick up the same quantity of at least one article.

7. Moving apparatus according to Claim 1, **characterized in that** the at least one transport apparatus (4) is configured to be able to receive an unprocessed article from the at least one first pickup component (21) at a first transport position and transport the unprocessed article to a second transport position, and to be able to transport a processed article from the second transport position to a third transport position to be picked up by the at least one second pickup component (22).

8. Moving apparatus according to Claim 1, **characterized in that** the at least one pickup apparatus and the at least one transport apparatus (4) are disposed on one side or two sides of the conveyor belt (3).

9. Moving apparatus according to Claim 1, **characterized in that** the moving apparatus further comprises a controller, the controller being configured to control coordinated movement of the at least one pickup apparatus, the at least one transport apparatus and the conveyor belt.

10. A packaging device (1), comprising:
at least one moving apparatus according to any one of Claims 1 - 9;
at least one packaging apparatus (5), configured to package an article transported by the moving apparatus;
a console, configured to control the moving apparatus and the packaging apparatus (5).

11. Packaging device (1) according to Claim 10, **characterized in that** the article is a container, and the packaging apparatus (5) is a filling/plugging apparatus.

12. Method for using the moving apparatus according to any one of Claims 1 - 9 to carry out packaging, the method comprising the following steps:
1) at a first pickup position, picking up a first article (71) from a conveyor belt (3) by means of a first pickup component (21) of a pickup apparatus (2);
2) moving the pickup apparatus (2) from the first pickup position to a second pickup position, and at the second pickup position, placing the first article (71) on a transport apparatus (4) in a first transport position, and causing the conveyor belt (3) to step one distance of travel, such that a second article (72), placed on the conveyor belt (3) so as to be spaced apart from the first article (71), moves to the first pickup position;
3) transporting the first article (71) from the first transport position to a second transport position by means of the transport apparatus (4), moving the pickup apparatus to the first pickup position and picking up the second article (72) from the conveyor belt (3) by means of the first pickup component (21);
4) moving the pickup apparatus (2) from the first pickup position to the second pickup position;
5) causing the transport apparatus (4) to transport the first article (71) from the second transport position to a third transport position, and causing the second pickup component (22) to pick up the first article (71) from the third transport position;
6) moving the transport apparatus (4) to the first transport position, and causing the first pickup component (21) to place the second article (72) on the transport apparatus (4);
7) transporting the second article (72) from the first transport position to the second transport position by means of the transport apparatus (4), moving the pickup apparatus (2) from the second pickup position to the first pickup position, and placing the first article (71) on the conveyor belt (3) by means of the second pickup component (22);
8) causing the conveyor belt (3) to step forward by said one distance of travel, then causing the first pickup component (21) to pick up a third article (73) from the conveyor belt (3);
9) moving the pickup apparatus (2) from the first pickup position to the second pickup position;
10) repeating steps 5) to 9), wherein in the steps performed in the next repetition, the second article is regarded as a first article, and the third article is regarded as a second article.

13. Method according to Claim 12, **characterized in that** a filling/plugging step is performed at the second transport position.
